# EUROPÄISCHE PATENTSCHRIFT

(11) **EP 3 159 505 B1**
(45) Veröffentlichungstag und Bekanntmachung des Hinweises auf die Patenterteilung: **08.01.2020**
(21) Anmeldenummer: 15190482.8
(22) Anmeldetag: 20.10.2015
(51) Int. Cl.: F01D 25/30, F01D 5/28, F01D 25/28, F01D 25/24, F01D 25/00, F01D 11/18

(54) **ZWISCHENGEHÀUSE FÜR EINE GASTURBINE**
INTERMEDIATE CASING FOR A GAS TURBINE
CARTER INTERMÉDIAIRE POUR UNE TURBINE A GAZ

(43) Veröffentlichungstag der Anmeldung: 26.04.2017
(73) Patentinhaber: MTU Aero Engines AG, 80995 München (DE)
(72) Erfinder: HUMHAUSER, Werner, 85368 Moosburg (DE); KLINGELS, Hermann, 85221 Dachau (DE); JACKSON, Hugh Alun John, 85757 Karlsfeld (DE); STANKA, Rudolf, 84431 Rattenkirchen (DE); EICHINGER, Alois, 85276 Pfaffenhofen (DE)

(56) Entgegenhaltungen:
- US-A- 5 357 744
- US-A1- 2002 184 892
- US-A1- 2006 010 879
- US-A1- 2013 011 242

## Beschreibung

Die Erfindung betrifft eine Modul für ein Zwischengehäuse für eine Gasturbine nach dem Oberbegriff des Anspruchs 1.

Aufgrund der hohen Eintrittstemperatur in die Turbine von Triebwerken und des begrenzten Druckverhältnisses in einem Hochdruckverdichter, wird die Austrittstemperatur der Hochdruckturbine zunehmend höher. Dabei wird die Einsatztemperatur ungekühlter metallischer Gaskanalteile überschritten. Eine Kühlung dieser Bauteile hat aufgrund des hohen benötigten Kühlluftbedarfes negative Auswirkungen auf den Gesamtwirkungsgrad des Triebwerkes. Gekühlte Strukturen erhöhen überdies die Leckageverluste durch das Kühlsystem.

In bekannten Fluggasturbinen werden derzeit zur Heißgasführung gekühlte und ungekühlte metallische Strukturen eingesetzt. Die aus hochwarmfesten metallischen Legierungen bestehenden Bauteile werden entweder als integraler Ring oder als Segmente gegossen. In Abhängigkeit vom Temperaturniveau, der radialen Temperaturverteilung, der absoluten Bauteilgröße und/oder der Bauteilbelastung werden die Bauteile entsprechend ausgelegt.

Dabei ist es nachteilig, dass die Bauteile ein hohes Gewicht aufweisen und der Einsatz von ungekühlten Bauteilen nur für bestimmte Temperaturen zugelassen sind. Sind höhere Bauteiltemperaturen notwendig, so müssen diese Bauteile aufwendig gekühlt werden, was unter Umständen das Gewicht erhöht und sich negativ auf den Kraftstoffverbrauch auswirkt. Die US 5 357 744 A offenbart ein konventionelles Gasturbinenzwischengehäuse, wobei das Aussengehäuse und das rotationssymmetrische Bauteil zur Heißgasführung aus unterschiedlichen Bauteilen aufgebaut sind, allerdings keine weiteren Hinweise hinsichtlich Materialien und thermischen Ausdehnungskoeffizienten oder Speichenzentrierung offenbart wird.

Somit liegt der vorliegenden Erfindung die Aufgabe zu Grunde, ein Modul vorzustellen, dass ein heißgasführendes Bauteil aufweist, das ohne zusätzliche Kühlung hohe Temperaturen verträgt.

Die Aufgabe wird durch die Merkmale des Anspruchs 1 gelöst.

Die Erfindung betrifft ein Modul nämlich ein Turbinenzwischengehäuse für eine Gasturbine. Das Modul umfasst ein rotationssymmetrisches, im Wesentlichen kegelstumpfförmiges, Außengehäuse aus einem ersten Material mit einem hohen thermischen Ausdehnungskoeffizienten. Ferner umfasst das Modul ein rotationssymmetrisches Bauteil zur Heißgasführung aus einem zweiten Material mit einem niedrigen thermischen Ausdehnungskoeffizienten. Außerdem umfasst das Modul mindestens eine ringförmige Struktur, die radial innerhalb des Bauteils angeordnet ist und mindestens drei, insbesondere über den Umfang des Außengehäuses gleichverteilte und auf gleicher axialer Höhe angeordnete, Streben mit jeweils einem radial inneren Ende und jeweils einem radial äußeren Ende, wobei die äußeren Enden mit dem Außengehäuse befestigt sind und die inneren Enden mit der ringförmigen Struktur befestigt sind. Das Bauteil weist mindestens eine erste Fixierung auf, zur Realisierung einer Speichenzentrierung, die in radialer Richtung frei und
axialer Richtung fest ist. Dabei ist die erste Fixierung zwischen dem Bauteil und dem Außengehäuse und/oder dem Bauteil und der ringförmigen Struktur angeordnet. Damit wird eine Speichenzentrierung realisiert. Das Modul umfasst mindestens drei zweite Fixierungen, die in radialer Richtung, axialer Richtung und/oder in Umfangsrichtung eine elastische Wirkung aufweisen, wobei die zweite Fixierung zwischen dem Bauteil und der Strebe und/oder zwischen dem Bauteil und der ringförmigen Struktur angeordnet ist.

Die erste Fixierung kann durch eine einzige erste Fixierung, z.B. durch einen umlaufenden Steg, der in einer komplementär ausgebildeten, vorzugsweise ebenfalls umlaufenden Nut aufgenommen ist, gebildet sein, oder aber auch durch eine Mehrzahl von einzelnen ersten Fixierungen, insbesondere durch wenigstens drei erste Fixierungen gebildet sein. Vorzugsweise bildet die eine erste Fixierung oder die Mehrzahl an ersten Fixierungen zusammen eine speichenzentrierte Lagerung für das Bauteil.

Unter den Begriffen "hoher thermischer Ausdehnungskoeffizient" und "niedriger thermischer Ausdehnungskoeffizient" ist insbesondere im Sinne der vorliegenden Erfindung zu verstehen, dass der Grundwerkstoff des Gehäuses einen thermischen Ausdehnungskoeffizienten aufweist, der wenigstens 1,5, vorzugsweise wenigstens 2 mal so groß ist, wie der thermische Ausdehnungskoeffizient des Grundwerkstoffs des Bauteils. Beispielsweise kann das Gehäuse aus einem metallischen Grundwerkstoff gebildet sein und das Bauteil aus einem keramischen Grundwerkstoff gebildet sein.

Der Begriff "rotationssymmetrisch" ist im Sinne der vorliegenden Erfindung nicht streng geometrisch zu verstehen, sondern soll lediglich zum Ausdruck bringen, dass das Außengehäuse und das Bauteil im Wesentlichen ringförmig ausgebildet sind, wobei die Mittelachse der Triebwerksachse entspricht.

Unter "elastischer Wirkung" wird bei der vorliegenden Erfindung insbesondere verstanden, dass die mindestens drei zweite Fixierungen derart elastisch bzw. weich ausgebildet sein sollen, dass sie die betriebsbedingten thermischen Differenzdehnungen in radialer Richtung, axialer Richtung und/oder in Umfangsrichtung zwischen dem Bauteil und der Strebe bzw. zwischen dem Bauteil und der ringförmigen Struktur ausgleichen können, ohne dabei die strukturelle Integrität des Bauteils und der Strebe bzw. der ringförmigen Struktur zu beeinträchtigen und ohne dabei selbst den elastischen Verformungsbereich zu verlassen. Vorzugsweise besteht diese elastische Wirkung sowohl in radialer Richtung als auch in axialer Richtung und in Umfangsrichtung bezogen auf eine Rotationsachse des Triebwerks. Insbesondere wenn das Material des Bauteils und/oder der Strebe bzw. der ringförmigen Struktur verhältnismäßig spröde ist, wie dies zum Beispiel bei einem keramischen Werkstoff zutrifft, ist es wichtig, dass die mindestens drei zweiten Fixierungen keine derart hohen Spannungen das Bauteil bzw. die Strebe bzw. die ringförmige Struktur einbringen, welche mit der Zeit zu einem Versagen des Bauteils führen könnte.

Damit werden die unterschiedlichen thermischen Dehnung der beiden Materialien wirkungsvoll entkoppelt, so dass das Bauteil bei großen Temperaturunterschieden zwischen dem Außengehäuse und dem Bauteil keinen Schaden nimmt.

In einer vorteilhaften Ausgestaltung der Erfindung weist das erste Material eine hochtemperaturbeständige Metalllegierung und/oder das zweite Material eine faserverstärkte Keramik auf bzw. ist vorzugsweise daraus gebildet. Keramiken weisen niedrige thermische Ausdehnungskoeffizienten und geringere Thermalspannungen auf. Damit eignet sich die Keramik besonders gut für integrale Strukturen. Allerdings ist eine Keramik spröde und weist eine geringe Festigkeit auf. Dennoch kann wegen der erfinderischen Auslegung des Moduls ein solches Material verwendet werden, ohne dass dabei das Bauteil im Betrieb beschädigt wird. Durch den Einsatz von faserverstärkten Keramiken kann die Austrittstemperatur beispielsweise einer Hochdruckturbine deutlich erhöht werden. Dabei braucht das heißgasführende Bauteil nicht zusätzlich gekühlt zu werden. Außerdem wird das Gewicht, wegen der geringen Dichte der Keramik im Vergleich zu einem Metall, deutlich reduziert.

In einer weiteren vorteilhaften Ausgestaltung der Erfindung weist das erste Material einen linearen thermischen Ausdehnungskoeffizient von 10 bis 20 µm/m/K und/oder das zweite Material einen linearen thermischen Ausdehnungskoeffizient von 1 bis 5 µm/m/K auf.

In einer weiteren vorteilhaften Ausgestaltung der Erfindung weist das integrale Bauteil eine radial äußere Wandung und eine radial innere Wandung auf, die über mindestens drei radial verlaufende und hohle Verkleidungen miteinander verbunden sind. Segmentierte Bauteile umfassen Segmente auf. Dabei sind die Kontaktflächen von den Segmenten verschleißanfällig. Ferner sind diese Kontaktflächen nie ganz dicht, so dass dort immer eine gewisse Segmentleckage vorhanden ist. Das Bauteil ist dann integral, wenn die äußere Wandung, die innere Wandung und die Verkleidung aus einem einzige Stück gefertigt sind. Damit eliminiert die integrale Ausführung die Verschleißanfälligkeit von Kontaktflächen zwischen den Segmenten und die Segmentleckage, da es dann keine Segmente existieren.

In einer weiteren vorteilhaften Ausgestaltung der Erfindung weist die äußere Wandung auf der Höhe der Verkleidung eine erste Öffnung auf und/oder die innere Wandung auf der Höhe der Verkleidung eine zweite Öffnung auf. Dies hat den Vorteil, dass verglichen zum Heißgas kalte Sperrluft zwischen dem Außengehäuse und der radial äußeren Wandung des Bauteils durch die Verkleidung radial nach innen fließen kann.

In einer weiteren vorteilhaften Ausgestaltung der Erfindung verläuft mindestens eine Strebe durch die äußere und innere Wandung. Vorzugsweise verlaufen in jeder Verkleidung vorzugsweise eine hohle Strebe. Im Hohlraum der Strebe können Fluidleitungen verlegt sein. Die Streben leiten die mechanischen Kräfte vom Außengehäuse zum Innenlager eines Triebwerks. Die Strebe kommt durch die Verkleidung nicht in Kontakt mit dem Heißgas. Außerdem kann die Strebe strukturmechanisch ausgelegt werden, ohne die Aerodynamik zu berücksichtigen. Diese strömungsmechanische Formgebung wird durch die Verkleidung übernommen.

In einer weiteren vorteilhaften Ausgestaltung der Erfindung ist an mindestens einer der Streben ein im Wesentlichen axial verlaufender Arm angeformt, wobei das freie Ende des Arms in einer radialen Aufnahme angeordnet ist, die im Hohlraum der Verkleidung geformt ist. Dabei bilden der Arm und die Aufnahme die zweite Fixierung. Der Arm wird vorzugsweise an der stromabwärtigen Seite der Strebe angeformt. Die Strömungsrichtung bezieht sich auf die Hauptströmungsrichtung des Heißgases. Vorzugsweise sind, gleichmäßig über den Umfang verteilt, 12 Streben vorhanden, wobei jede Strebe dann einen solchen Arm aufweist. Im Umfangsrichtung weist die Aufnahme keine bzw. kaum Freiheitgrade auf. Der Arm kann dann aber elastisch ausgeführt sein, so dass die Verkleidung in Umfangsrichtung ausweichen kann. Der Arm kann in radialer und axialer Richtung in der Aufnahme gleiten.

In einer weiteren vorteilhaften Ausgestaltung der Erfindung ist zwischen der Wandung des Hohlraums und dem freien Ende ein Metallblech angeordnet ist. Dies bietet den Vorteil, dass die Flächen des freien Endes und die Flächen des Hohlraums geschont werden.

In einer weiteren vorteilhaften Ausgestaltung der Erfindung umfasst das Modul einen Innenring, wobei das eine Ende des Innenrings an der ringförmigen Struktur befestigt ist und an der Innenwandung eine Fixieraufnahme angeformt ist.

In einer weiteren vorteilhaften Ausgestaltung der Erfindung umfasst das Modul mindestens einen radial oder axial verlaufenden Stab, wobei das eine Ende des Stabs in der Fixieraufnahme beweglich angeordnet ist und das andere Ende des Stabs mit dem anderen Ende des Innenrings verbunden ist. Dabei bilden das Bauteil, der Stab und der Innenring die zweite Fixierung. Bei der axialen Ausführung des Stabes kann das eine Ende zylindrisch oder ballig (tonnenförmig) ausgeführt sein, so dass im ersten Fall vorzugsweise eine axiale Bewegung möglich ist und im zweiten Fall zusätzlich oder alternativ eine Schwenkbewegung um die Fixieraufnahme möglich ist. Damit wird eine im Wesentliche radiale Beweglichkeit erzielt. Bei der radialen Ausführung des Stabes kann das eine Ende zylindrisch oder ballig (tonnenförmig) ausgeführt sein, so dass im ersten Fall vorzugsweise eine radiale Gleitbewegung möglich ist und im zweiten Fall zusätzlich oder alternativ eine Schwenkbewegung um die Fixieraufnahme möglich ist. Damit wird eine im Wesentliche axiale Beweglichkeit des anderen Endes des Stabes erzielt.

In einer weiteren vorteilhaften Ausgestaltung der Erfindung ist am anderen Ende des Innenrings ein zylindrischer Käfig angeformt, der an der Fixieraufnahme befestigt ist. Damit bilden das Bauteil und der Innenring samt zylindrischen Käfig die zweite Fixierung. Vorzugsweise weist die Wandung des Käfigs mindestens eine Aussparung auf. Damit wird der Käfig elastischer, insbesondere dann, wenn auf dem Umfang mehrere Aussparungen vorhanden sind, die vorzugsweise gleichmäßig über den Umfang verteilt sind. Damit kann sich die stromaufwärtige Kante des Käfigs gegenüber der stromabwärtigen Kante des Käfigs verdrehen oder sich gar verformen. Damit kann beispielsweise ein keramisches Bauteil in Umfangsrichtung ausweichen.

In einer weiteren vorteilhaften Ausgestaltung der Erfindung ist die erste Fixierung in der Nähe der stromaufwärtigen Kante des Bauteils angeordnet.

In einer weiteren vorteilhaften Ausgestaltung der Erfindung ist die erste Fixierung auf der gleichen axialen Höhe angeordnet wie die zweite Fixierung. Die axiale Richtung bezieht sich auf die Triebwerksachse. Dies hat den Vorteil, dass das Bauteil nicht zur Welle kippen kann.

In einer weiteren vorteilhaften Ausgestaltung der Erfindung ist das Modul ein Turbinenzwischengehäuse.

Weitere vorteilhafte Ausgestaltungen der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- - Figur 1:: einen Längsschnitt durch ein erfindungsgemäßes Modul nach einer ersten Ausführungsform,
- - Figur 2:: einen Querschnitt durch die Verkleidung aus Figur 1,
- - Figur 3:: einen Längsschnitt durch ein erfindungsgemäßes Modul nach einer zweiten Ausführungsform,
- - Figur 4:: einen Längsschnitt durch ein erfindungsgemäßes Modul nach einer dritten Ausführungsform,
- - Figur 5:: einen Längsschnitt durch ein erfindungsgemäßes Modul nach einer vierten Ausführungsform, und
- - Figur 6:: eine Draufsicht auf den Käfig aus Figur 5.

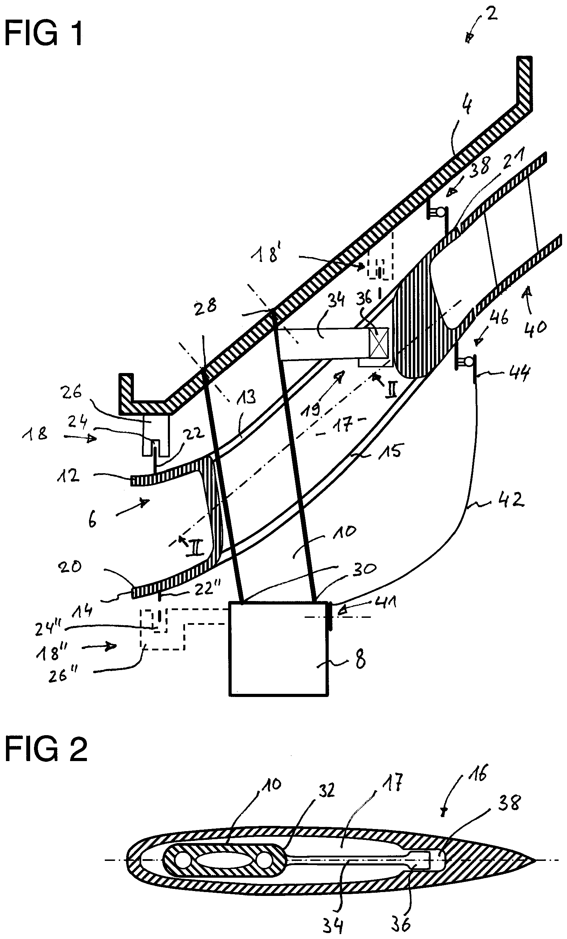

Die Figuren 1, 3, 4 und 5 zeigen ein rotationssymmetrisches Modul 2, beispielsweise ein Turbinenzwischengehäuse, mit einem metallischen Außengehäuse 4, das integral oder segmentiert sein kann, einem keramischen Bauteil 6 zur Heißgasführung, einer ringförmigen Struktur 8, die hier in Form eines Torsionskastens 8 ausgebildet ist, und mindestens einer Strebe 10, von der nur eine einzige sichtbar ist. Vorzugsweise sind zwölf Streben vorhanden, die gleichmäßig über den Umfang verteilt sind. In Figur 1 wird hier nur der über einer horizontal verlaufenden Triebwerksachse angeordnete Teil des Moduls 2 abgebildet. Das Bauteil 6 weist eine radial äußere Wandung 12, eine radial innere Wandung 14 und mindestens eine sich radial erstreckende Verkleidung 16 auf. Vorzugsweise sind auch zwölf Verkleidungen vorhanden, die gleichmäßig über den Umfang des Bauteils 6 verteilt sind. Das Bauteil 6 ist integral ausgeführt, d.h. dass die äußere Wandung 12 mit einer Öffnung 13, die innere Wandung 14 mit einer Öffnung 15 und die Verkleidungen 16 aus einem einzigen Stück aufgebaut sind. Dabei verbindet die im Wesentlichen radial verlaufende und hohle Verkleidung 16 mit einem Hohlraum 17 die beiden Wandungen 12 und 14 miteinander. Der Hohlraum 17 ist mit den Öffnungen 13 und 15 ausgerichtet, so dass die zwischen dem Außengehäuse 4 und der äußeren Wandung 12 vorhandene kalte Sperrluft über den Hohlraum 17 radial nach innen fließen kann. Die Verkleidungen 16 trennen die Sperrluft von dem zwischen der äußeren Wandung 12 und der inneren Wandung 14 fließenden Heißgas. Das Heißgas fließt hier in den Figuren 1, 3, 4 und 5 horizontal von links nach rechts.

Ferner ist das Bauteil 6 gegenüber dem Außengehäuse 4 axial fixiert. Dies kann durch eine erste Fixierung 18 erfolgen, die an der äußeren Wandung 12 in der Nähe der stromaufwärtigen Kante 20 des Bauteils 6 angeordnet ist. Dazu sind mindestens drei Fixierungen 18 notwendig. So kann beispielsweise an der äußeren Wandung ein Stift 22 angeordnet sein, der in einer Stiftaufnahme 24 des am Außengehäuse 4 befestigten Fixierungsklotzes 26 geführt ist. Der Stift 22 kann radial in der Stiftaufnahme 24 gleiten. Der Stift weist vorzugsweise keinen Freiheitsgrad in axialer Richtung auf. Damit ist eine sogenannte Speichenzentrierung realisiert. Andere Speichenzentrierungen sind denkbar. So kann dies beispielsweise mittels eines Gleitsteines umgesetzt werden.

In einer zweiten Ausführungsform ist die erste Fixierung 18' auf der gleichen axialen Höhe wie eine zweite Fixierung 19, 50, 50' und 50" angeordnet.

In der dritten Ausführungsform ist die erste Fixierung 18" an der inneren Wandung 14 in der Nähe der stromaufwärtigen Kante 20 des Bauteils 6 angeordnet. So kann beispielsweise an der inneren Wandung 14 ein radial verlaufender Stift 22" angeordnet sein, der in einer Stiftaufnahme 24" eines am Torsionskasten 8 befestigten Fixierungsklotzes 26" geführt ist. Der Stift 22" kann radial in der Stiftaufnahme 24" gleiten.

Das radial äußere Ende 28 der Strebe 10 ist mit dem Außengehäuse 4 verschraubt. Dies ist mit den beiden strichpunktierten Linien angedeutet. Das radiale innere Ende 30 der Strebe 10 ist mit dem Torsionskasten 8 verbunden.

In der Nähe der stromabwärtigen Kante 21 des Bauteils 6 ist zwischen dem Außengehäuse 4 und der äußeren Wandung 12 eine Bürstendichtung 38 angeordnet. Der Heißgaskanal wird am stromabwärtigen Ende 21 des Bauteils 6 durch ein Leitgitter 40 verlängert.

Nun wird die erste Ausführungsform der zweiten Fixierung 19 aus Figur 1 näher erläutert. Die Figur 2 zeigt einen Querschnitt durch die Verkleidung 16 entlang der Linie II-II in Figur 1. An der stromabwärtigen Kante 32 der Strebe 10 in der Nähe des radial äußeren Endes 28 ist ein Arm 34 mit einem verdickten freien Ende 36 angeformt. Der Arm 34 verläuft hier im Wesentlichen axial, wobei das freie Ende 36 in einer Aufnahme 38 der Verkleidung 16 angeordnet ist. Das freie Ende 36 kann in radialer und axialer Richtung innerhalb der Aufnahme 38 gleiten und wird lediglich in Umfangsrichtung geführt. Allerdings kann der Arm 36 elastisch sein, so dass sich die Strebe 10 innerhalb des Hohlraums 17 in Umfangsrichtung bewegen kann. Zum Schutz der Flächen des freien Endes 36 und der Aufnahme 38 kann ein Metallstreifen vorgesehen sein.

In dieser Ausführungsform ist das eine Ende 41 (als Flansch ausgeführt) eines Sperrluftblech 42 am Torsionskasten 8 befestigt. Am anderen Ende 44 des Sperrluftblechs 42 ist eine Bürstendichtung 46 vorgesehen, die mit einem Vorsprung an der unteren Wandung 14 in der Nähe der stromabwärtigen Kante 21 des Bauteils 6 dichtend zusammenwirkt.

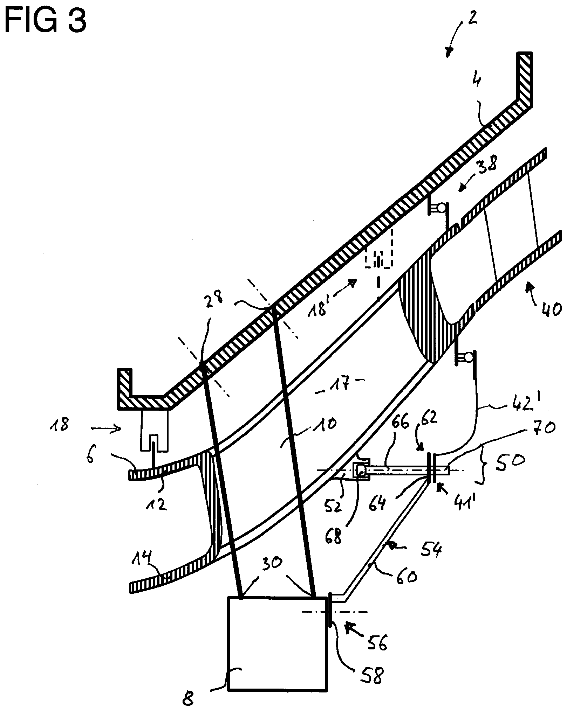

Nun wird die zweite Ausführungsform der zweiten Fixierung 50 aus Figur 3 näher erläutert. Dabei werden nur noch die Unterschiede zur ersten Ausführungsform erläutert. Die Strebe 10 weist nun keinen Arm mehr auf.

An der inneren Wandung 14 ist eine axial verlaufende Fixieraufnahme 52 angeformt, die hier im Wesentlich axial mittig zwischen dem stromaufwärtigen Ende 20 und dem stromabwärtigen Ende 21 angeordnet ist. Das Modul 2 weist ferner einen Innenring 54 auf. Das (stromaufwärtige) Ende 56 des Innenrings 54 weist einen hier radial verlaufenden Flansch 58 auf, der mit dem Torsionskasten 8 verschraubt ist. Am Flansch 58 ist ein kegelstumpfförmiger Körper 60 des Innenrings 54 angeformt, der am stromabwärtigen Ende 62 mit einem ebenfalls radial verlaufenden Flansch 64 abschließt. Diese Flansch 64 ist hier auf derselben radialen Höhe angeordnet wie die Fixieraufnahme 52. Allerdings ist der Flansch 64 in axialer Richtung im Vergleich zur Fixieraufnahme 52 weiter stromabwärts angeordnet. Das eine Ende 41' des Sperrblechs 42' ist ebenfalls auf der selben radialen Höhe wie der Flansch 64 angeordnet und liegt an diesem Flansch 64 direkt an. Ferner umfasst das Modul 2 mindestens einen Stab 66 mit einem ersten in der Fixieraufnahme 52 angeordneten Ende 68. Dabei kann dieses erste Ende 68 zylinderförmig oder ballig geformt sein, so dass im ersten Fall der Stab 66 in axialer Richtung gleiten kann und im zweiten Fall zusätzlich oder alternativ in radialer Richtung um die Fixieraufnahme 52 schwenken kann. Das andere Ende 70 des Stabs 66 ist durch die beiden Flansche 41' und 64 geführt und dort eingespannt.

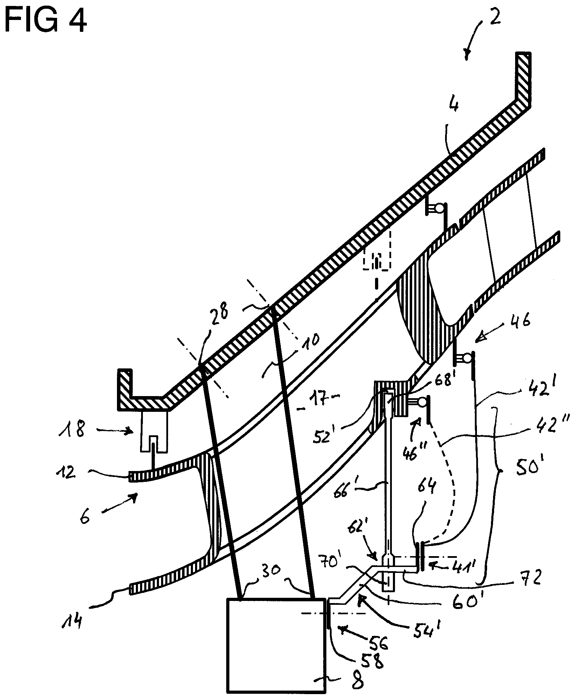

Nun wird die dritte Ausführungsform der zweiten Fixierung 50' aus Figur 4 näher erläutert. Dabei werden nur noch die Unterschiede zur ersten und zur zweiten Ausführungsform erläutert. Die Strebe 10 weist nun keine Arm mehr auf.

An der inneren Wandung 14 ist eine radial nach innen verlaufende Fixieraufnahme 52' angeformt, die hier näher zum stromabwärtigen Ende 21 als zum stromaufwärtigen Ende des Bauteils 6 angeordnet ist. Das Modul 2 weist ferner einen Innenring 54' auf. Das (stromaufwärtige) Ende 56 des Innenrings 54' weist einen hier radial verlaufenden Flansch 58 auf, der mit dem Torsionskasten 8 verschraubt ist. Am Flansch 58 ist ein kegelstumpfförmiger Körper 60' des Innenrings 54 angeformt. Zwischen dem Körper 60' und dem stromabwärtigen Ende 62 mit einem ebenfalls radial verlaufenden Flansch 64 ist ein hier horizontal verlaufender zylindrischer Bereich 72 mit mindestens einer Bohrung angeformt. Dabei bildet der Bereich 72 das andere Ende 62' des Innenrings 54'. Die Bohrung ist hier auf der selben axialen Höhe angeordnet wie die Fixieraufnahme 52'. Allerdings ist die Bohrung in radialer Richtung im Vergleich zur Fixieraufnahme 52' weiter innen angeordnet. Das eine Ende 41' des Sperrblechs 42' ist ebenfalls auf derselben radialen Höhe wie der Flansch 64 angeordnet und liegt an diesem Flansch 64 direkt an. Ferner umfasst das Modul 2 mindestens einen radial verlaufenden Stab 66' mit einem ersten in der Fixieraufnahme 52' angeordneten Ende 68'. Dabei kann dieses erste Ende 68' zylinderförmig oder ballig geformt sein, so dass im ersten Fall der Stab 66' in radialer Richtung gleiten kann und im zweiten Fall zusätzlich oder alternativ um die Fixieraufnahme 52' in axialer Richtung schwenken kann. Das andere Ende 70' des Stabs 66' ist durch die im zylindrischen Bereich 72 befindlichen Bohrung eingeführt und dort eingespannt. In Kombination oder alternativ dazu kann das Sperrblech 42" (gestrichelt dargestellt) eine an der Fixieraufhahme 52' angeordneten Bürstendichtung 46" aufweisen. Das Sperrblech 42" umfasst den bereits bekannten Flansch 41'.

Nun wird die vierte Ausführungsform der zweiten Fixierung 50" aus Figur 4 näher erläutert. Dabei werden nur noch die Unterschiede zu den ersten drei Ausführungsformen erläutert. Die Strebe 10 weist nun keine Arm mehr auf.

An der inneren Wandung 14 ist eine axial verlaufende Fixieraufnahme 52" angeformt, die hier im Wesentlich axial mittig zwischen dem stromaufwärtigen Ende 20 und dem stromabwärtigen Ende 21 angeordnet ist. Die Fixieraufnahme 52" ist hier als Flansch ausgelegt. Das Modul 2 weist ferner einen Innenring 54" auf. Das (stromaufwärtige) Ende 56 des Innenrings 54" weist einen hier radial verlaufenden Flansch 58 auf, der mit dem Torsionskasten 8 verschraubt ist. Am Flansch 58 ist ein kegelstumpfförmiger Körper 60 des Innenrings 54" angeformt, der mit dem ebenfalls radial verlaufenden Flansch 64 abschließt. Diese Flansch 64 ist hier etwas radial unterhalb der Fixieraufnahme 52" angeordnet. Allerdings ist der Flansch 64 in axialer Richtung im Vergleich zur Fixieraufnahme 52 weiter stromabwärts angeordnet. Das eine Ende 41' des Sperrblechs 42' ist ebenfalls auf derselben radialen Höhe wie der Flansch 64 angeordnet und liegt an diesem Flansch 64 direkt an. Am radialen oberen Ende des Flansches 64 ist ein stromaufwärtig axial verlaufender zylindrischer Käfig 74 angeformt. Dabei bildet der Käfig 74 das andere Ende 62" des Innenrings 54". Am stromaufwärtigen Ende 76 des Käfigs 74 ist ein radial nach außen verlaufender Flansch 78 angeformt, der auf derselben radialen Höhe angeordnet ist wie die Fixieraufhahme 52". Der Flansch 78 und die Fixieraufnahme 52" sind miteinander verschraubt.

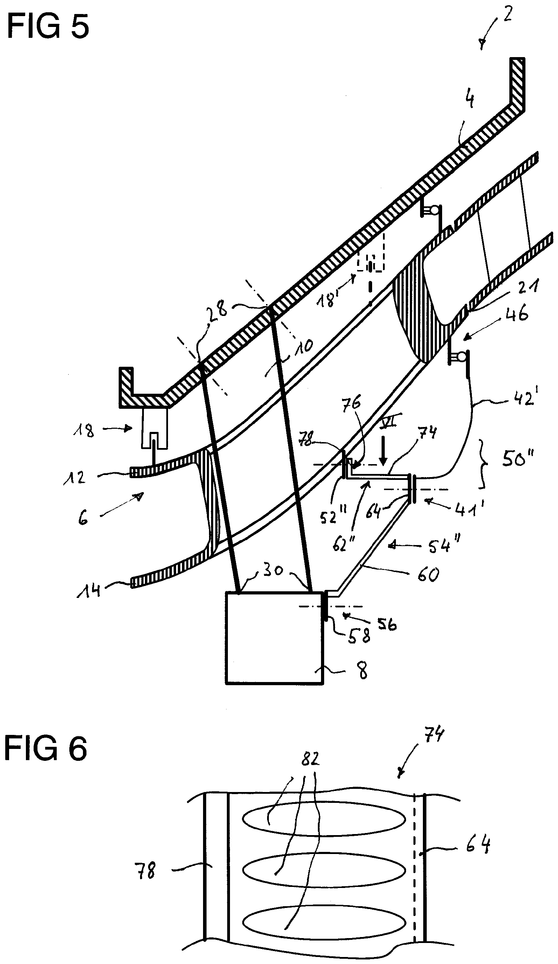

In Figur 6 ist in eine Draufsicht des Käfigs 74 in Richtung des Pfeils VI aus Figur 5 abgebildet. Der Käfig 74 kann mehrere Aussparungen 82 aufweisen.

Die verschiedenen beschriebenen Alternativen sind beliebig kombinierbar.

### Bezugszeichenliste

- 2: Modul
- 4: Außengehäuse
- 6: Bauteil
- 8: ringförmige Struktur (Torsionskasten)
- 10: Strebe
- 12: Äußere Wandung von 6
- 13: Öffnung von 12
- 14: Innere Wandung von 6
- 15: Öffnung von 14
- 16: Verkleidung von 6
- 17: Hohlraum von 16
- 18: 1. Alternative für eine erste Fixierung
- 19: 2. Fixierung
- 20: Stromaufwärtige Kante von 6
- 21: Stromabwärtige Kante von 6
- 22: Stift
- 24: Stiftaufnahme
- 26: Fixierungsklotzes
- 28: Radiale äußere Ende von 10
- 30: Radiales innere Ende von 10
- 32: Stromabwärtige Kante von 10
- 34: Arm
- 36: Ende von 34
- 38: Bürstendichtung
- 40: Leitgitter
- 42: Sperrblech
- 44: Anderes Ende von 42
- 46: Bürstendichtung
- 50: 2. Aufführungsform der zweiten Fixierung
- 52: Fixieraufnahme
- 54: Innenring
- 56: Stromaufwärtige Ende von 54
- 58: Flansch
- 60: Körper
- 62: Stromabwärtige Ende von 54
- 64: Flansch 64
- 66: Stab
- 68: Erstes Ende von 66
- 70: Andere Ende von 66
- 72: Zylindrischer Bereich von 54'
- 74: Käfig
- 76: Stromaufwärtiges Ende von 74
- 78: Flansch von 74
- 82: Aussparung
- VI: Blickrichtung auf 74

## Patentansprüche

1. Modul (2), nämlich ein Turbinenzwischengehäuse, für eine Gasturbine umfassend:
- ein rotationssymmetrisches Außengehäuse (4) aus einem ersten Material mit einem hohen linearen thermischen Ausdehnungskoeffizienten,
- ein rotationssymmetrisches Bauteil (6) zur Heißgasführung aus einem zweiten Material mit einem niedrigen linearen thermischen Ausdehnungskoeffizienten,
- mindestens eine ringförmige Struktur (8), die radial innerhalb des Bauteils (6) angeordnet ist,
- mindestens drei Streben (10) mit jeweils einem radial inneren Ende (30) und jeweils einem radial äußeren Ende (28), wobei die äußeren Enden (30) mit dem Außengehäuse (4) befestigt sind und die inneren Enden (30) mit der ringförmigen Struktur (8) befestigt sind,
**dadurch gekennzeichnet, dass** das Bauteil (6) wenigstens eine erste Fixierung (18, 18', 18") aufweist, die zur Realisierung einer Speichenzentrierung in radialer Richtung frei und axialer Richtung fest ist, wobei die erste Fixierung (18, 18', 18") zwischen dem Bauteil (6) und dem Außengehäuse (4) und/oder dem Bauteil (6) und der ringförmigen Struktur (8) angeordnet ist,
wobei das Modul (2) mindestens drei zweite Fixierungen (19, 50, 50', 50") aufweist, die in radialer Richtung, axialer Richtung und/oder in Umfangsrichtung eine elastische Wirkung aufweisen, wobei die zweite Fixierung (19, 50, 50', 50") zwischen dem Bauteil (6) und der Strebe (10) und/oder zwischen dem Bauteil (6) und der ringförmigen Struktur (8) angeordnet ist.

2. Modul nach Anspruch 1, **dadurch gekennzeichnet, dass** das erste Material eine hochtemperaturbeständige Metalllegierung und/oder das zweite Material eine faserverstärkte Keramik aufweist.

3. Modul nach mindestens einem der vorherigen Ansprüche, **dadurch gekennzeichnet, dass** das erste Material einen linearen thermischen Ausdehnungskoeffizienten von 10 bis 20 µm/m/K und/oder das zweite Material einen linearen thermischen Ausdehnungskoeffizienten von 1 bis 5 µm/m/K aufweist.

4. Modul nach mindestens einem der vorherigen Ansprüche, **dadurch gekennzeichnet, dass** das Bauteil (6) eine radial äußere Wandung (12) und eine radial innere Wandung (14) aufweist, die über mindestens drei radial verlaufende und hohle Verkleidungen (16) miteinander verbunden sind.

5. Modul nach Anspruch 4, wobei die äußere Wandung (12) auf der Höhe der Verkleidung (16) eine erste Öffnung (13) aufweist und/oder die innere Wandung (14) auf der Höhe der Verkleidung (16) eine zweite Öffnung (15) aufweist.

6. Modul nach Anspruch 5, wobei mindestens eine Strebe (10) durch die äußere und innere Wandung (12, 14) verläuft.

7. Modul nach mindestens einem der vorherigen Ansprüche, **dadurch gekennzeichnet, dass** an mindestens einer Strebe (10) ein im Wesentlichen axial verlaufender Arm (34) angeformt ist, wobei das freie Ende (36) des Arms (34) in einer Aufnahme (38) angeordnet ist, die im Hohlraum (17) der Verkleidung (16) geformt ist,

8. Modul nach Anspruch 7, wobei zwischen der Wandung der Aufnahme (38) und dem freien Ende (36) ein Metallblech angeordnet ist.

9. Modul nach mindestens einem der vorherigen Ansprüche, **dadurch gekennzeichnet, dass** das Modul (2) einen Innenring (54, 54', 54") umfasst, wobei das eine Ende des Innenrings (56) an der ringförmigen Struktur (8) befestigt ist und an der Innenwandung (14) eine Fixieraufnahme (52, 52', 52") angeformt ist.

10. Modul nach Anspruch 9, wobei das Modul mindestens einen radial oder axial verlaufenden Stab (66, 66') umfasst, wobei das eine Ende (68, 68') des Stabs (66, 66') in der Fixieraufnahme (52, 52') in Axialrichtung des Stabes (66, 66') beweglich angeordnet ist und das andere Ende (70) des Stabs (66, 66') mit dem anderen Ende (62, 62') des Innenrings (54, 54') verbunden ist.

11. Modul nach Anspruch 9, wobei am anderen Ende (62") des Innenrings (54") ein zylindrischer Käfig (74) angeformt ist, der an der Fixieraufnahme (52") befestigt ist.

12. Modul nach Anspruch 11, wobei die Wandung des Käfigs (74) mindestens eine Aussparung (82) aufweist.

13. Modul nach mindestens einem der vorherigen Ansprüche, **dadurch gekennzeichnet dass** die erste Fixierung (18, 18") in der Nähe der stromaufwärtigen Kante (20) des Bauteils (6) angeordnet ist.

14. Modul nach mindestens einem der vorherigen Ansprüche, **dadurch gekennzeichnet, dass** die erste Fixierung (18') auf der gleichen axialen Höhe angeordnet ist wie die zweite Fixierung (19, 50, 50', 50").

## Claims

1. Module (2), in particular an intermediate turbine housing for a gas turbine comprising:
- a rotationally symmetrical outer housing (4), made from a first material having a high linear thermal expansion coefficient,
- a rotationally symmetrical component (6) for conducting hot gas, made from a second material having a low linear thermal expansion coefficient,
- at least one annular structure (8) which is arranged radially inside the component (6),
- at least three struts (10) each having a radially inner end (30) and a radially outer end (28), the outer ends (30) being attached to the outer housing (4) and the inner ends (30) being attached to the annular structure (8),
**characterized in that** the component (6) has at least one first fixing means (18, 18', 18") which is free in the radial direction and fixed in the axial direction in order to achieve spoke centering, the first fixing means (18, 18', 18") being arranged between the component (6) and the outer housing (4) and/or between the component (6) and the annular structure (8), the module (2) having at least three second fixing means (19, 50, 50', 50") which have an elastic effect in the radial direction, axial direction and/or in the circumferential direction, the second fixing means (19, 50, 50', 50") being arranged between the component (6) and the strut (10) and/or between the component (6) and the annular structure (8).

2. Module according to claim 1, **characterized in that** the first material comprises a high-temperature-resistant metal alloy and/or the second material comprises a fiber reinforced ceramic material.

3. Module according to at least one of the preceding claims, **characterized in that** the first material has a linear thermal expansion coefficient of from 10 to 20 µm/m/K and/or the second material has a linear thermal expansion coefficient of from 1 to 5 µm/m/K.

4. Module according to at least one of the preceding claims, **characterized in that** the component (6) has a radially outer wall (12) and a radially inner wall (14) which are interconnected by means of at least three radially extending and hollow panels (16).

5. Module according to claim 4, wherein the outer wall (12) has a first opening (13) at the level of the panel (16) and/or the inner wall (14) has a second opening (15) at the level of the panel (16).

6. Module according to claim 5, wherein at least one strut (10) extends through the outer and inner wall (12, 14).

7. Module according to at least one of the preceding claims, **characterized in that** a substantially axially extending arm (34) is integrally formed on at least one strut (10), the free end (36) of the arm (34) being arranged in a receptacle (38) which is formed in the hollow space (17) of the panel (16).

8. Module according to claim 7, wherein a metal sheet is arranged between the wall of the receptacle (38) and the free end (36).

9. Module according to at least one of the preceding claims, **characterized in that** the module (2) comprises an inner ring (54, 54', 54"), with one end of the inner ring (56) being attached to the annular structure (8) and a fixing receptacle (52, 52', 52") being integrally formed on the inner wall (14).

10. Module according to claim 9, wherein the module comprises at least one radially or axially extending rod (66, 66'), wherein one end (68, 68') of the rod (66, 66') is movably arranged in the fixing receptacle (52, 52') in the axial direction of the rod (66, 66') and the other end (70) of the rod (66, 66') is connected to the other end (62, 62') of the inner ring (54, 54').

11. Module according to claim 9, wherein a cylindrical cage (74) is integrally formed at the other end (62") of the inner ring (54") and is attached to the fixing receptacle (52").

12. Module according to claim 11, wherein the wall of the cage (74) has at least one recess (82).

13. Module according to at least one of the preceding claims, **characterized in that** the first fixing means (18, 18") is arranged near the upstream edge (20) of the component (6).

14. Module according to at least one of the preceding claims, **characterized in that** the first fixing means (18') is arranged at the same axial level as the second fixing means (19, 50, 50', 50").

## Revendications

1. Module (2), notamment carter intermédiaire de turbine, pour une turbine à gaz, comprenant:
- un carter extérieur à symétrie de rotation (4) formé d'un premier matériau présentant un coefficient de dilatation thermique linéaire élevé,
- un composant à symétrie de rotation (6) servant à guider un gaz chaud, formé d'un second matériau présentant un faible coefficient de dilatation thermique linéaire, au moins une structure annulaire (8) disposée radialement à l'intérieur du composant (6),
- au moins trois entretoises (10) comportant chacune une extrémité radialement intérieure (30) et chacune ayant une extrémité radialement extérieure (28), les extrémités extérieures (30) étant fixées au carter extérieure (4), et les extrémités intérieures (30) étant fixées à la structure annulaire (8),
**caractérisé en ce que** le composant (6) comporte au moins une première fixation (18, 18', 18") qui est libre dans la direction radiale et fixée dans la direction axiale afin de réaliser le centrage des rayons, la première fixation (18, 18', 18") étant disposée entre le composant (6) et le carter extérieur (4) et/ou entre le composant (6) et la structure annulaire (8), le module (2) comportant au moins trois secondes fixations (19, 50, 50', 50") qui ont un effet élastique dans la direction radiale, axiale et/ou circonférentielle, la seconde fixation (19, 50, 50', 50") étant disposée entre le composant (6) et l'entretoise (10) et/ou entre le composant (6) et la structure annulaire (8).

2. Module selon la revendication 1, **caractérisé en ce que** le premier matériau est un alliage métallique résistant aux hautes températures et/ou **en ce que** le second matériau est constitué de matériaux céramiques renforcés de fibres.

3. Module selon au moins l'une des revendications précédentes, **caractérisé en ce que** le premier matériau présente un coefficient de dilatation thermique linéaire de 10 à 20 µm/m/K et/ou **en ce que** le second matériau présente un coefficient de dilatation thermique linéaire de 1 à 5 µm/m/K.

4. Module selon au moins l'une des revendications précédentes, **caractérisé en ce que** le composant (6) comporte une paroi radialement extérieure (12) et une paroi radialement intérieure (14), lesquelles parois sont reliées par au moins trois habillages (16) creux s'étendant radialement.

5. Module selon la revendication 4, dans lequel la paroi extérieure (12) au niveau de l'habillage (16) comporte une première ouverture (13) et/ou la paroi intérieure (14) au niveau de l'habillage (16) comporte une seconde ouverture (15).

6. Module selon la revendication 5, dans lequel au moins une entretoise (10) traverse les parois extérieure et intérieure (12, 14).

7. Module selon au moins l'une des revendications précédentes, **caractérisé en ce qu'**un bras (34) s'étendant sensiblement axialement est réalisé sur au moins une entretoise (10), l'extrémité libre (36) du bras (34) étant disposée dans un logement (38) qui est réalisé dans la cavité (17) de l'habillage (16).

8. Module selon la revendication 7, dans lequel une tôle métallique est disposée entre la paroi du logement (38) et l'extrémité libre (36).

9. Module selon au moins l'une des revendications précédentes, **caractérisé en ce que** le module (2) comprend un anneau intérieur (54, 54', 54"), une extrémité de l'anneau intérieur (56) étant fixée sur la structure annulaire (8), et un logement de fixation (52, 52', 52") étant réalisé au niveau de la paroi intérieure (14).

10. Module selon la revendication 9, le module comprenant au moins une tige (66, 66') s'étendant radialement ou axialement, une extrémité (68, 68') de la tige (66, 66') étant disposée de manière mobile dans le logement de fixation (52, 52') dans la direction axiale de la tige (66, 66') et l'autre extrémité (70) de la tige (66, 66') étant reliée à l'autre extrémité (62, 62') de l'anneau intérieur (54, 54').

11. Module selon la revendication 9, dans lequel une cage cylindrique (74) est réalisée au niveau de l'autre extrémité (62") de l'anneau intérieur (54") et est fixée au logement de fixation (52").

12. Module selon la revendication 11, dans lequel la paroi de la cage (74) présente au moins un évidement (82).

13. Module selon au moins l'une des revendications précédentes, **caractérisé en ce que** la première fixation (18, 18") est disposée à proximité du bord amont (20) du composant (6).

14. Module selon au moins l'une des revendications précédentes, **caractérisé en ce que** la première fixation (18') est disposée à la même hauteur axiale que la seconde fixation (19, 50, 50', 50").
